# EUROPEAN PATENT SPECIFICATION

(11) **EP 1 886 554 B1**
(45) Date of publication and mention of the grant of the patent: **21.03.2012**
(21) Application number: 07380190.4
(22) Date of filing: 28.06.2007
(51) Int. Cl.: A01K 1/015

(54) **Slatted device for stable floors**
Spaltboden für Stallböden
Caillebotis pour étables

(30) Priority: 02.08.2006 ES 200602092
(43) Date of publication of application: 13.02.2008
(73) Proprietor: Rotecna, S.A., 25310 Agramunt (Lleida) (ES)
(72) Inventor: Romeu Guardia, Gener, 25310 Agramunt (Lleida) (ES)
(74) Representative: Curell Suñol, Marcelino

(56) References cited:
- EP-A- 0 945 058
- FR-A- 2 810 846
- FR-A- 2 811 199
- GB-A- 2 203 625
- US-A1- 2006 048 469

## Description

### Field of the invention

The invention relates to a slatted device for stable floors, suitable for being installed as a separation between the waste pit and the stable compartments, comprising a chassis and a movable trap door with a plurality of openings, with the trap door resting on the chassis.

### State of the art

The floors of the compartments of stabled animals usually have grooves or openings that separate the animals' compartments from the pit below for collecting their excrements. The grooves are sized so that in preventing damage to the animal's feet, they allow said excrements to fall into the pit. However, in the case of compartments for large animals, and particularly the compartments for mother animals, the volume of excrements and the small size of the grooves, does not allow the excrements to fall easily into the pit. This means that these compartments have to be cleaned manually by a worker.

To facilitate cleaning these compartments, in the state of the art manholes in the floor have been used consisting of a hole with a removable trap door or a rotary trap door. In both cases, during the stable cleaning operation there is the risk of the young animals falling into the hole. Moreover, in the case of the removable trap door, there is the added risk of the trap door falling into the hole, whereby it has to be recovered from a particularly insalubrious environment. Finally, the rotary trap door always infers with the cleaning operation, because one of the sides of the hole is obstructed by the actual trap door.

Document FR 2 810 846 discloses a slatted stable floor for industrial animal breeding, in particular for industrial pig breeding. The slatted floor is intended to be mounted on stable pit wherein the animal excrements are collected. The slatted floor comprises pivot or hinge means, such that a part of the floor can pivot along an axis between a closing position, wherein said floor extends horizontally along the pit, and an opening position, wherein said pit is accessible.

The invention poses the technical problem of facilitating the cleaning of this type of stable compartments, avoiding the drawbacks caused by the trap door. In addition, an object of this invention is also to prevent young animals from falling into the pit during the cleaning operation of the stable compartment floor.

### Disclosure of the invention

This aim is achieved by means of a slatted device for stable floors of the type indicated at the beginning wherein hinge means are provided between said chassis and said trap door, characterised in that said hinge means are sliding hinge means, so that through these sliding hinge means, the trap door can swing and move with respect to the chassis to a position in which the trap door can be inserted into the pit in a downward movement.

In fact, thanks to the sliding hinge means, not only can the trap door swing, but it can also be retracted into the pit. Therefore it is much easier to clean the stable compartment floor, because the excrements can be comfortably removed by pushing them inside the pit from any side of the slatted device. Also, the downwards movement of the trap door causes most of the excrements deposited on its surface to also fall into the pit. So it is simpler, more hygienic and quicker to clean the stable compartment floor than in the case of the usual state-of-the-art stable floors.

It is also worth highlighting that the device according to the invention can be mounted on a brick floor, for example a cement floor, or it can be part of a larger slat covering the whole of the stable compartment floor.

Preferably, in the device according to the invention the chassis comprises a frame and the sliding hinge means are the combination of an axis and at least two side guides, with the axis extending between opposite faces of the frame and the side guides being provided on the trap door.

Also, it is particularly preferable that the axis comprises at least two inner pivots provided on the opposite faces of said frame. This arrangement considerably simplifies the assembly, since, for example, these pivots can be clicked inside the side guides of the trap door.

As mentioned, another of the problems posed by opening the trap door is the high risk that the mothers' young may fall accidentally into the pit during the cleaning operation. Therefore, preferably the chassis comprises a secondary slat provided below the trap door. In fact, this secondary slat has larger holes than those of the trap door, which the animals walk over. Therefore, the openings of the secondary slat allow the excrements to fall easily into the pit. However, these openings are small enough to prevent any young animals from falling accidentally into the pit.

The animals' compartment is cleaned regularly, and therefore the secondary slat gets progressively dirty. In the medium term, the excrements dry on the surface of the secondary slat, thereby reducing the size of its openings. Therefore, from time to time, for example, when the mothers and their young are moved to other stable compartments and this compartment remains empty temporarily, it may be interesting to thoroughly clean the slatted device. Therefore, preferably the secondary slat can be removed from said frame. This way said secondary slat can be cleaned thoroughly with a water jet outside the stable.

The trap door of the device according to the invention can always swing and move with respect to the chassis. However, depending on the position in the pit of the trap door once it is retracted, the amount of excrements that knocks against said trap door will vary. Therefore, preferably, the inner pivots are provided near a first end of the frame. This way the trap door in its retracted position interferes as little as possible, therefore allowing the stable compartment floor to be cleaned comfortably. Also, it prevents the trap door from getting excessively dirty.

In order to facilitate the cleaning of the stable compartment as much as possible, it is desirable that the pit hole be as large as possible and that at the same time, the trap door, in its retracted position, interferes as little as possible with the excrements falling into the pit. Consequently, preferably, the frame is rectangular and the inner pivots are provided on the longer faces of said frame. Therefore, in this advantageous arrangement the pit inlet hole, in the longitudinal direction, is completely free. This makes it considerably easier to remove the excrements and significantly reduces the amount of excrements that knocks against the top surface of the trap door as it falls, thereby improving the cleaning of the stable compartment floor.

If the joining elements between the trap door and the chassis are, for example, screws, it may be difficult to remove the trap door because the dried excrements on these joining elements cause premature rusting that makes it difficult to remove the trap door. So, preferably the side guides of the trap door are open at one end. This means that the sliding hinge means do not have any joining elements that need to be removed using tools, and therefore the trap door can be assembled and removed from the chassis very easily.

It is important to ensure that the stabled animals, and particularly the mothers, cannot open the trap door of the slatted device because of the risk this represents for the young animals. In particular, if the animals walk on the area between the hinge axis and the pit wall nearest the axis, and parallel to it, with their weight they can generate an opening torque that could lift the trap door. This accidental opening could cause the young to fall onto the secondary slat or become trapped between the trap door and the chassis. To avoid this, preferably the slatted device envisages clicking means between the trap door and the secondary slat

### Brief description of the drawings

Other advantages and characteristics of the invention will be appreciated from the following non-limiting description of a preferable embodiment of the invention, with reference to the attached drawings, in which:
Fig. 1, an isometric perspective view of a stable floor with a slatted device according to the invention.
Fig. 2, an exploded isometric perspective view of the floor with the slatted device of Figure 1.
Fig. 3, a perspective view of the slatted device according to the invention, with the trap door in its folded position.

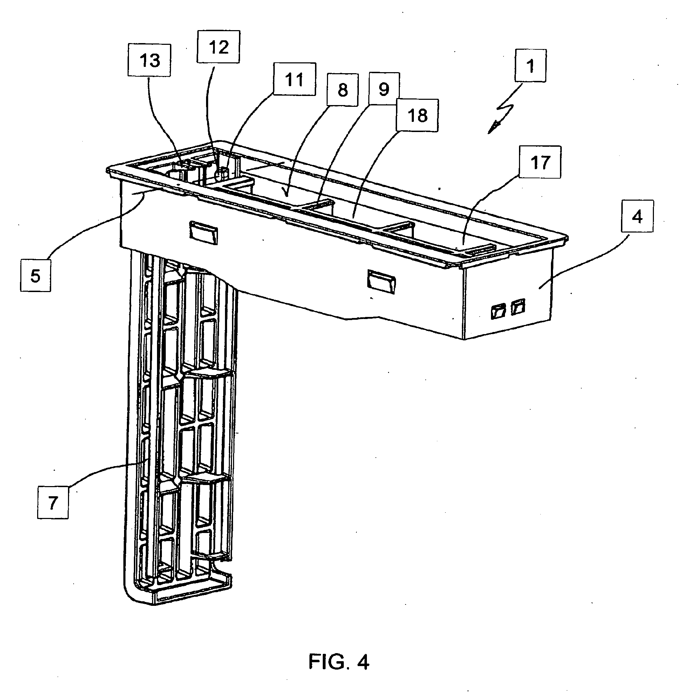

Fig. 4, a perspective view of the slatted device according to the invention, with the trap door in its retracted position.

### Detailed description of an embodiment of the invention

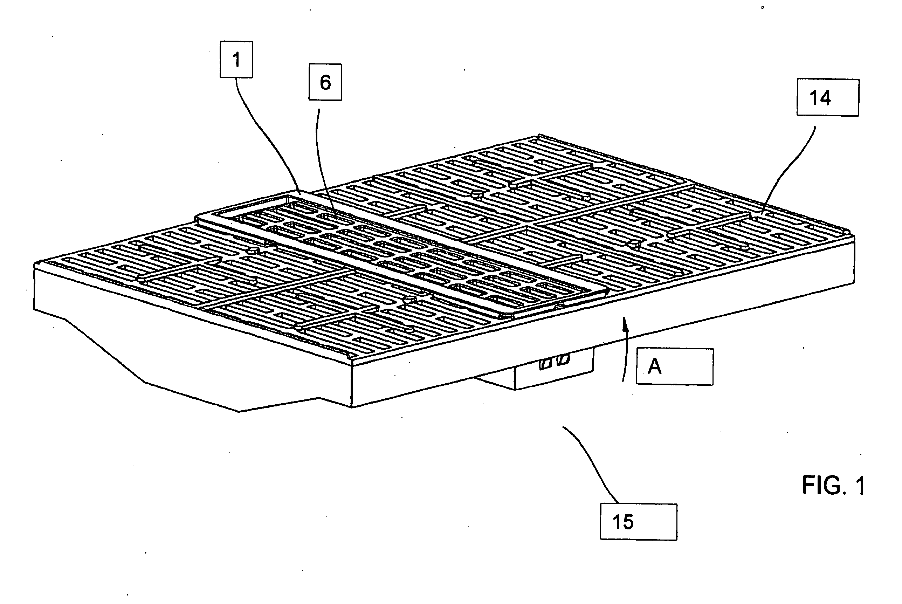

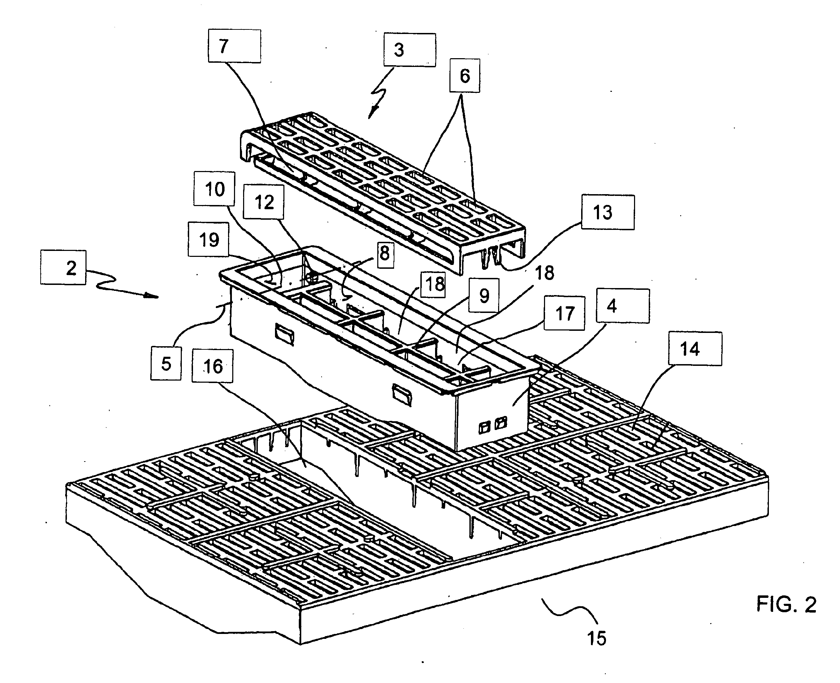

Figures 1 and 2 show a slatted device 1 according to the invention mounted in a suitable housing 16 of a stable floor 14. In this case, stable floor 14 also has a slat. However, device 1 according to the invention can also be mounted on construction floors, without departing from the object of the invention, in other words, simplifying the cleaning of the stable compartment floor. Therefore, slatted device 1 is assembled so that is separates the stable compartment from the pit 15, not shown but referenced, located below the floor 14.

As it can be better seen in Figure 2, the slatted device mainly comprises a chassis 2 and a movable trap door 3. Trap door 3 has a plurality of openings 6 intended to prevent the excessive accumulation of excrements. Chassis 2 comprises a removal hole 17 over which trap door 3 is assembled. Between chassis 2 and trap door 3, sliding hinge means 11 are provided that allow trap door 3 to swing and move with respect to chassis 2, so that said trap door, during the operation of cleaning floor 14 of the stable compartment, is concealed inside pit 15.

In this embodiment, chassis 2 comprises a rectangular frame 4 that surrounds removal hole 17. Over opposite longer faces 8 of frame 4, near a first end 10 of the frame 4, two inner pivots 12 are provided that define a hinge axis 5. Moreover, trap door 3 has side guides 7 in the shape of a groove open at one end. This way, sliding hinge means 11 are the result of inserting pivots 12 into side guides 7 of trap door 3. Naturally, this is not the only possible arrangement of sliding hinge means 11. Therefore, for example, pivots 12 could be replaced with a rigid rod that extends between opposite faces 8 of frame 4. Furthermore, it would also be feasible for side guides 7 to be provided on frame 4 and for trap door 3 to have pivots suitable for cooperating with side guides 7. Also the fact that side guides 7 of trap door 3 are open at one end is an important advantage, because it avoids using additional joining elements, such as for example, screws. However, the invention also contemplates the possibility that pivots 12 can be threaded so as to ensure trap door 3 is attached more firmly.

Chassis 2, also comprises a secondary slat 9 located below trap door 3 that reduces the transverse section of removal hole 17. As mentioned above, one of the problems that occurs when cleaning stable compartment floor 14 is the danger of young animals falling into pit 15 during the cleaning operation. Therefore this secondary slat 9, defines secondary openings 18 that are much bigger than openings 6 of trap door 3 so that it is easier for the excrements to fall through, but on the other hand, small enough to prevent young animals from falling through them.

Optionally, secondary slat 9 can be removed from chassis 2. By means of this solution, secondary slat 9 can be cleaned thoroughly, for example, when the compartment is not being used by any animal.

In order to ensure that trap door 3 is firmly closed, this embodiment provides clicking means 13 that act between trap door 3 and secondary slat 9 of chassis 2. These clicking means 13 prevent generating an opening torque that could accidentally lift trap door 3 if the animal walks on the area between axis 5 and wall 19 of chassis 2. Such a situation could cause a young animal to fall onto secondary slat 9 and be squashed by trap door 3 in its downward movement.

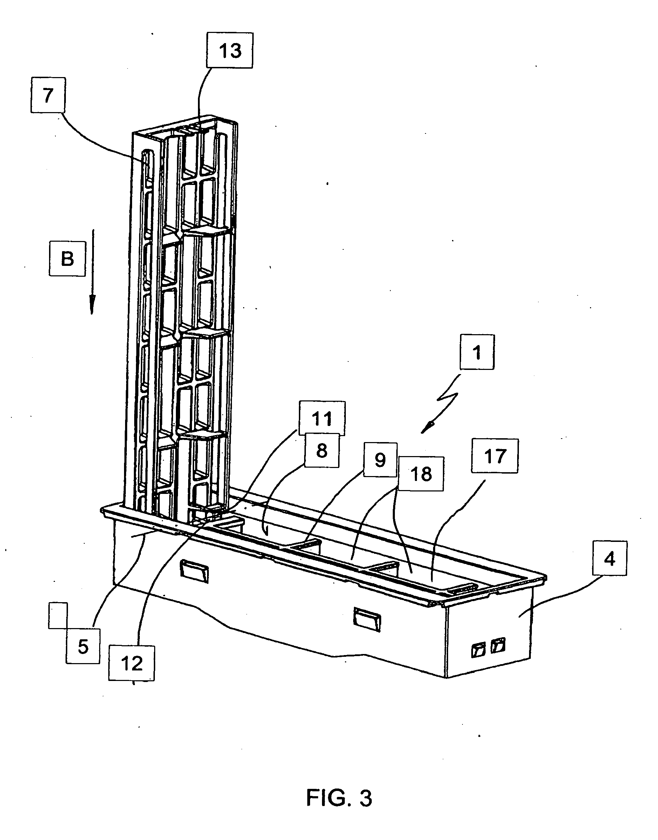

There follows below the description of an operating mode of slatted device 1 according to the invention. Beginning with the view shown in Figure 1, trap door 3 is raised, for example by hand, and is rotated around axis 5, in the direction of arrow A in Figure 1. This movement continues until trap door 3 has reached a relatively raised position. Figure 3 shows trap door 3 in a position that is nearly 90° with respect to stable compartment floor 14. However, it is not necessary to complete the 90° to subsequently insert trap door 3 into pit 15. In fact, the necessary rotation angle for inserting trap door 3 depends essentially on the shape of frame 4 and the free space available inside pit 15. So, once a raised position is reached such as that shown in Figure 3, trap door 3 is inserted in the direction of arrow B inside pit 15, by moving side guides 7 of trap door 3 along pivots 12, in other words with respect to chassis 2. This way, trap door 3 remains in its final position and the stable compartment floor can be cleaned. In this position the excrements on the compartment floor can be easily pushed so that it falls inside the pit, without trap door 3 presenting an impediment.

Once the floor cleaning operation is completed, trap door 3 can be closed again by inverting the steps described above.

As can be seen from this description, the slatted device for stable floors according to the invention succeeds in resolving in a particularly novel, simple and comfortable way, the technical problem of cleaning stable floors without the trap door of the device jeopardising the cleaning operation.

## Claims

1. Slatted device for stable floors, suitable for being installed as a separation between waste pits and stable compartments, comprising
[a] a chassis (2), and
[b] a movable trap door (3) with a plurality of openings (6), said trap door (3) resting on said chassis (2),
[c] hinge means, being provided between said chassis (2) and said trap door (3),
**characterised in that**
[d] said hinge means are sliding hinge means (11),
so that through said sliding hinge means (11), said trap door (3) can swing and move with respect to said chassis (2) to a position in which said trap door (3) can be inserted into said pit (15).

2. Slatted device for stable floors according to claim 1, **characterised in that** said chassis (2) comprises a frame (4) and said sliding hinge means (11) are made up of an axis (5) and at least two side guides (7) that cooperate mutually, said axis (5) extending between opposite faces (8) of said frame (4) and said side guides (7) being provided on said trap door (3).

3. Slatted device for stable floors according to claim 2, **characterised in that** said axis (5) comprises at least two inner pivots (12) provided on said opposite faces (8) of said frame (4).

4. Slatted device for stable floors according to any of the claims 1 to 3, **characterised in that** said chassis (2) comprises a secondary slat (9) provided under said trap door (3).

5. Slatted device for stable floors according to claim 4, **characterised in that** said secondary slat (9) can be removed from said chassis (2).

6. Slatted device for stable floors according to any of the claims 3 to 5, **characterised in that** said inner pivots (12) are provided near a first end (10) of said frame (4).

7. Slatted device for stable floors according to any of the claims 3 to 6, **characterised in that** said frame (4) is rectangular and **in that** said inner pivots (12) are provided on the longer faces of said frame (4).

8. Slatted device for stable floors according to any of the claims 2 to 7, **characterised in that** said side guides (7) of said trap door (3) are open at one end.

9. Slatted device for stable floors according to any of the claims 4 to 8, **characterised in that** between said trap door (3) and said secondary slat (9) clicking means are provided (13)

## Patentansprüche

1. Spaltboden für Stallböden, dazu geeignet, dass er als Abtrennung zwischen Güllegruben und Stallbuchten installiert werden kann, umfassend:
[a] einen Hauptrahmen (2) und
[b] eine bewegliche Falltür (3) mit einer Mehrzahl von Öffnungen (6), wobei die Falltür (3) auf dem Hauptrahmen (2) anliegt,
[c] Gelenkmittel, die zwischen dem Hauptrahmen (2) und der Falltür (3) vorgesehen sind,
**dadurch gekennzeichnet, dass**
[d] die Gelenkmittel verschiebbare Gelenkmittel (11) sind, so dass durch die verschiebbaren Gelenkmittel (11) die Falltür (3) in Bezug auf den Hauptrahmen (2) in eine Position schwenkbar und beweglich ist, in der die Falltür (3) in die Grube (15) eingesetzt werden kann.

2. Spaltboden für Stallböden nach Anspruch 1, **dadurch gekennzeichnet, dass** der Hauptrahmen (2) einen Rahmen (4) umfasst und die verschiebbaren Gelenkmittel (11) aus einer Achse (5) und mindestens zwei Seitenführungen (7) gebildet sind, die miteinander kooperieren, wobei sich die Achse (5) zwischen gegenüberliegenden Seiten (8) des Rahmens (4) erstreckt und die Führungen (7) in der Falltür (3) vorgesehen sind.

3. Spaltboden für Stallböden nach Anspruch 2, **dadurch gekennzeichnet, dass** die Achse (5) mindestens zwei innere Achszapfen (12) umfasst, die auf den gegenüberliegenden Seiten (8) des Rahmens (4) vorgesehen sind.

4. Spaltboden für Stallböden nach einem der Ansprüche 1 bis 3, **dadurch gekennzeichnet, dass** der Hauptrahmen (2) einen sekundären Rost (9) umfasst, der unter der Falltür (3) vorgesehen ist.

5. Spaltboden für Stallböden nach Anspruch 4, **dadurch gekennzeichnet, dass** der sekundäre Rost (9) aus dem Hauptrahmen (2) entfernbar ist.

6. Spaltboden für Stallböden nach einem der Ansprüche 3 bis 5, **dadurch gekennzeichnet, dass** die inneren Achszapfen (12) nahe einem ersten Ende (10) des Rahmens (4) vorgesehen sind.

7. Spaltboden für Stallböden nach einem der Ansprüche 3 bis 6, **dadurch gekennzeichnet, dass** der Rahmen (4) rechtwinklig ausgebildet ist und dass die inneren Achszapfen (12) an den Längsseiten des Rahmens (4) vorgesehen sind.

8. Spaltboden für Stallböden nach einem der Ansprüche 2 bis 7, **dadurch gekennzeichnet, dass** die Seitenführungen (7) der Falltür (3) an einem Ende offen sind.

9. Spaltboden für Stallböden nach einem der Ansprüche 4 bis 8, **dadurch gekennzeichnet, dass** zwischen der Falltür (3) und dem sekundären Rost (9) Rastmittel (13) vorgesehen sind.

## Revendications

1. Caillebotis pour étables, approprié pour être installé en tant que séparation entre des puits de déchets et des compartiments d'étable, comprenant :
[a] un châssis (2), et
[b] une trappe mobile (3) avec une pluralité d'ouvertures (6), ladite trappe (3) reposant sur ledit châssis (2),
[c] des moyens de charnière qui sont prévus entre ledit châssis (2) et ladite trappe (3),
**caractérisé en ce que** :
[d] lesdits moyens de charnière sont des moyens de charnière coulissante (11),
de sorte que par le biais des moyens de charnière coulissante (11), ladite trappe (3) peut osciller et se déplacer par rapport audit châssis (2) dans une position dans laquelle ladite trappe (3) peut être insérée dans ledit puits (15).

2. Caillebotis pour étables selon la revendication 1, **caractérisé en ce que** ledit châssis (2) comprend un cadre (4) et lesdits moyens de charnière coulissante (11) sont composés d'un axe (5) et d'au moins deux guides latéraux (7) qui coopèrent mutuellement, ledit axe (5) s'étendant entre des faces opposées (8) dudit cadre (4) et lesdits guides latéraux (7) étant prévus sur ladite trappe (3).

3. Caillebotis pour étables selon la revendication 2, **caractérisé en ce que** ledit axe (5) comprend au moins deux pivots internes (12) prévus sur lesdites faces opposées (8) dudit cadre (4).

4. Caillebotis pour étables selon l'une quelconque des revendications 1 à 3, **caractérisé en ce que** ledit châssis (2) comprend un orifice secondaire (9) prévu sur ladite trappe (3).

5. Caillebotis pour étables selon la revendication 4, **caractérisé en ce que** ledit orifice secondaire (9) peut être retiré dudit châssis (2).

6. Caillebotis pour étables selon l'une quelconque des revendications 3 à 5, **caractérisé en ce que** lesdits pivots internes (12) sont prévus à proximité d'une première extrémité (10) dudit cadre (4).

7. Caillebotis pour étables selon l'une quelconque des revendications 3 à 6, **caractérisé en ce que** ledit cadre (4) est rectangulaire et **en ce que** lesdits pivots internes (12) sont prévus sur les plus longues faces dudit cadre (4).

8. Caillebotis pour étables selon l'une quelconque des revendications 2 à 7, **caractérisé en ce que** lesdits guides latéraux (7) de ladite trappe (3) sont ouverts au niveau d'une extrémité.

9. Caillebotis pour étables selon l'une quelconque des revendications 4 à 8, **caractérisé en ce que**, entre ladite trappe (3) et ledit orifice secondaire (9), on prévoit des moyens d'encliquetage (13).
